# EUROPÄISCHE PATENTANMELDUNG

(11) **EP 0 757 337 A2**
(43) Veröffentlichungstag der Anmeldung: **05.02.1997**
(21) Anmeldenummer: 96111749.6
(22) Anmeldetag: 22.07.1996
(51) Int. Cl.: G07F 7/10

(54) **Einheit aus Datenspeicherkarte und Schreib-/Lese-Gerät**

(30) Priorität: 02.08.1995 DE 19528297
(71) Anmelder: BAYER AG, 51368 Leverkusen (DE)
(72) Erfinder: Hartmann, Georg, Dr., 51061 Köln (DE); Weikert, Gunnar, Dr., 40589 Düsseldorf (DE); Horster, Patrick, Prof.Dr., 50226 Frechen (DE)

(57) **Zusammenfassung**

Es wird ein Verfahren zur Verlängerung der Gültigkeitsdauer von Smart Cards beschrieben, ohne daß diese von ihrem Besitzer aus der Hand gegeben werden müssen. Hierzu werden Smart Card-Benutzer nah installierte Schreib-/Lese-Geräte eingesetzt, die über von einer zentralen Ausgabestelle an den Besitzer mitgeteilte Verlängerungspaßwörter das Gültigkeitsdatum der Smart Card verlängern.

## Beschreibung

Persönliche Datenträgerkarten, die einen elektronisch lesbaren Datenträger in Form eines Magnetspeichers, eines Chipspeichers oder eines optischen Speicherbereiches aufweisen, werden vielfältig als Zugangsberechtigungskarten, Kreditkarten, Wertkarten (z.B. Telefonkarten) oder Krankenkassen-Karten eingesetzt. Ferner wurde in neuerer Zeit mehrfach vorgeschlagen, unter Ausnutzung der hoben Speicherkapazität von optischen Speicherkarten (Optical Memory Card = OMC) oder Hybridkarten (Optical Memory Chip Card = OMCC) persönliche Daten in verschlüsselter Form, insbesondere medizinische Informationen, in ständig mitführbarem Format - sogenannter Smart Cards - zu speichern.

Die Nutzbarkeit solcher Kartensysteme ist an die Existenz und Unterhaltung einer nicht unerheblichen Infrastruktur von Schreib-/Lese-Geräten, die von den Kartennutzern unterhalten werden müssen, gebunden.

Die Karten werden daher von den die Karten und die erforderliche Infrastruktur zur Verfügung stellenden Unternehmen jeweils gegen eine Benutzergebühr für einen begrenzten Nutzungsumfang abgegeben, wobei die Karten Informationen über den autorisierten Nutzungsumfang enthalten und nach Ausnutzung des Nutzungsumfangs ihre Gültigkeit verlieren. Dabei kann der Nutzungsumfang durch eine durch ein Ablaufdatum definierte Nutzungsdauer oder durch eine Nutzungsintensität, z.B. Nutzungshäufigkeit, oder einen Wert der Karte, der in der Karte gespeichert ist und bei jeder Nutzung aktualisiert wird (Restwert), definiert sein.

Eine Ausdehnung des Nutzungsumfangs der Karte erfolgt jeweils durch Zurverfügungstellung einer neuen Karte, wobei die alte Karte ungültig wird.

Dieses Revalidierungsverfahren ist dann bereits aus Kostengründen nicht mehr wirtschaftlich, wenn der Kartenkörper selbst technisch aufwendig gestaltet ist, z.B. in Form einer Optical Memory Card, einer Chip Card mit mehreren Chips oder in Form hybrider Optical Memory Chip Cards. Darüber hinaus ist eine Liquidation der alten Karte ausgeschlossen, wenn diese zur Speicherung persönlicher Daten, z.B. medizinischer Daten, dient, da die gespeicherten Daten bei der Liquidation verloren gingen. Ein Einsenden der Karte zur Revalidierung durch das diese zur Verfügung stellende Unternehmen scheidet ebenfalls aus, da während des Revalidierungszeitraums die Karte nicht zur Verfügung stünde und datenschutzrechtliche Bedenken bestehen.

Es besteht daher Bedarf an einem Verfahren zur Revalidierung von Karten im offline-Verfahren, bei dem die Karte einerseits im Bereich des Nutzers verbleibt und andererseits eine mißbräuchliche, nicht autorisierte Revalidierung sicher ausgeschlossen werden kann.

Erfindungsgemäß wird vorgeschlagen, die Revalidierung der Karte durch den Kartennutzer selbst mit Hilfe eines von der Kartenausgabestelle übermittelten, für die jeweilige Karte individualisierten Revalidierungspaßwortes durchzuführen. Hierzu ist es erforderlich, sowohl die Karte als auch die Schreib-/Lese-Geräte in spezifischer Weise zu gestalten.

Gegenstand der vorliegenden Erfindung ist eine Einheit aus Datenspeicherkarte 1 und mindestens einem Schreib-/Lese-Gerät 2, wobei die Karte 1 lediglich während eines definierten, verlängerbaren Gebrauchsintervalls (der Gültigkeit) vom Schreib-/Lese-Gerät 2 gelesen und/oder beschrieben werden kann und wobei die Gültigkeitsdauer der Karte 1 mittels eines auf die Karte bezogenen Verlängerungspaßwortes (VEC) verlängert werden kann, die durch die folgenden Merkmale gekennzeichnet ist:
a) Die Karte weist auf
a1) einen Speicherbereich, auf dem ein die Karte individualisierender Code IC gespeichert ist,
a2) einen Speicherbereich, auf dem ein weiterer Code VC gespeichert ist, der eine begrenzte Gültigkeit charakterisiert, sowie
a3) einen Speicherbereich DF als eigentlichen Datenträgerbereich;
b) mindestens ein Schreib-/Lese-Gerät, das
b1) Erkennungsprogramme R/IC, R/VC für den individualisierenden Code IC und den Gültigkeitscode VC aufweist,
b2) Zugriff zu einer Datenbasis Date, CV hat, die die bereits verbrauchte Gültigkeit der Karte charakterisiert,
b3) ein Programm, das aufgrund eines Vergleichs der Datenbasis Date, CV mit dem Gültigkeitscode VC entweder die Karte als ungültig zurückweist oder ein Schreib-/Lese-Programm für den eigentlichen Speicherbereich DF aktiviert, aufweist;
sowie
c) mindestens ein Schreib-/Lese-Gerät, das neben dem Merkmal b1) aufweist:
c1) ein Erkennungsprogramm für ein Verlängerungspaßwort VEC und
c2) ein Programm zur Verarbeitung des Verlängervngspaßwortes VEC mit dem individualisierenden Code IC und/oder dem Gültigkeitscode VC zur Erzeugung des neuen Gültigkeitscodes nVC sowie
c3) Mittel zum Schreiben des neuen Gültigkeitscodes nVC auf dem Speicherbereich für den Gültigkeitscode VC,
wobei die Schreib-/Lese-Geräte gemäß b) und c) in einem einzigen Gerät integriert sein können.

Das Verfahren zur Zurverfügungstellung und Revalidiening der Karte unter Einsatz der erfindungsgemäßen Einheit aus Karte und Schreib-/Lese-Gerät kann wie folgt durchgeführt werden:

Die erstmalige Zurverfügungstellung der Karte erfolgt mit einem in dem Speicherbereich der Karte für den Gültigkeitscode VC gespeicherten, autorisierten Anfangsnutzungsumfang. Bei jeder Nutzung der Karte wird der verbliebene Restnutzungsumfang bzw. die Gültigkeit der Karte geprüft. Innerhalb eines vordefinierten, verbliebenen Restnutzungsumfangs wird von der Kartenausgabestelle gegen Bezahlung der Revalidierungsgebühr durch den Karteninhaber diesem ein Revalidierungspaßwort VEC mitgeteilt. Bei einer nachfolgenden Nutzung, d.h. Eingabe der Karte in ein Schreib-/Lese-Gerät, wird dem Schreib-/Lese-Gerät das Revalidierungspaßwort eingegeben und die Revalidierung der Karte durch das Schreib-/Lese-Gerät vorgenommen.

Dabei kann vorgesehen sein, daß das Revalidierungspaßwort in Form einer in Klarschrift lesbaren Ziffern- und/oder Buchstabenfolge übermittelt wird, die dann über eine Tastatur in das Schreib-/Lese-Gerät eingelesen wird, oder aber in Form einer billigen, nur für den Einmal-Gebrauch gestalteten, elektronisch lesbaren Revalidierungskarte, die entweder in einen zusätzlichen Leseschlitz des Schreib-/Lese -Gerätes oder im Wechsel mit der zu revalidierenden Karte in den einzigen Leseschlitz eingeschoben wird.

Sofern der jeweils autorisierte Nutzungsumfang durch eine zeitliche Nutzungsdauer definiert ist, wird die Datenbasis Date vorzugsweise durch eine in das Schreib-/Lese -Gerät integrierte, nicht manipulierbare Kalenderuhr zur Verfügung gestellt. Vorzugsweise kann es sich dabei um eine funkgesteuerte Normalzeituhr handeln.

Sofern der jeweils autorisierte Nutzungsumfang durch eine Nutzungsintensität, z.B. eine Anzahl von Nutzungshandlungen oder einen vorausbezahlten Geldwertbetrag, definiert ist, ist die Datenbasis zur Ermittlung des noch autorisierten Restnutzungsumfangs CV in die Karte integriert und wird bei jeder Nutzung, d.h. bei jedem Einschieben der Karte in das Schreib-/Lese-Gerät, aufgrund der erfolgten Nutzung aktualisiert.

Die Erfindung wird nachfolgend anhand der beigefügten Figuren näher erläutert:
- Fig. 1: zeigt eine Einheit aus Karte und Schreib-/Lese-Gerät bei durch eine zeitliche Nutzungsdauer definiertem, autorisiertem Nutzungsumfang zur Erläuterung des Ablaufs der Kartennutzung.
- Fig. 2: zeigt eine Einheit gemäß Fig. 1 zur Erläuterung der Revalidierung.
- Fig. 3: zeigt eine Einheit gemäß Fig. 1, wobei der autorisierte Nutzungsumfang durch eine Nutzungsintensität definiert ist.

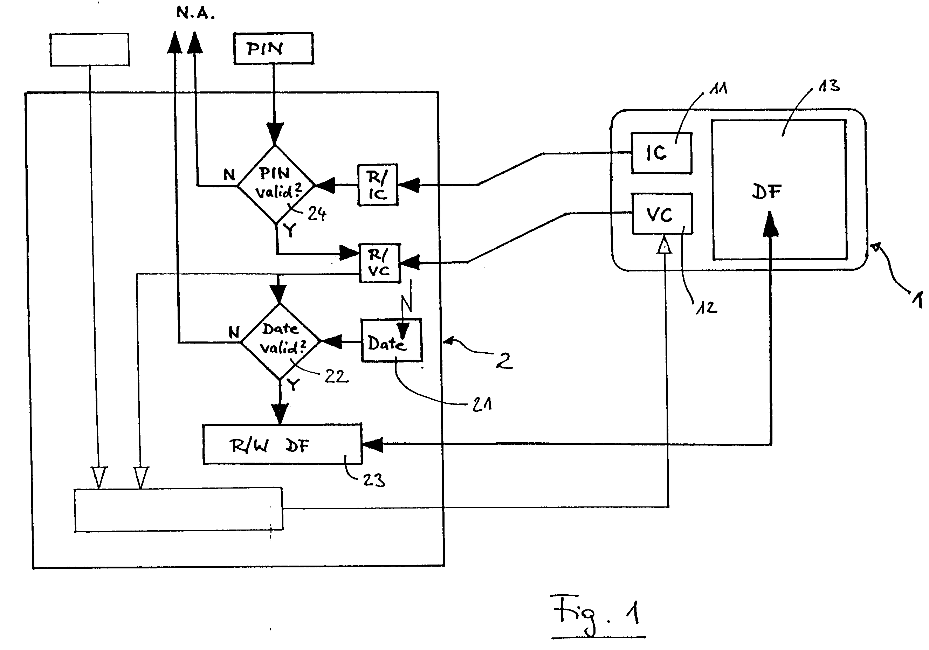

In Fig. 1 sind schematisch die Karte 1 und das Schreib-/Lese-Gerät 2 dargestellt. Die Karte weist einen ersten Speicherbereich 11 für die Speicherung des die Karte individualisierenden Codes IC, einen zweiten Speicherbereich 12 für die Speicherung des Gültigkeitscode VC sowie einen dritten Speicherbereich 13 zur Aufnahme des eigentlichen Informationsinhalts DF der Karte auf. Handelt es sich bei der Karte 1 z.B. um eine persönliche Karte zur Speicherung medizinischer Informationen, so würde das Speicherfeld 13 bei jedem Arztbesuch durch in der Arztpraxis aufgestellte Schreib-/Lese-Geräte 2 zur Bereitstellung der medizinischen Vorgeschichte gelesen werden können und zusätzliche Diagnosen, Therapie und Verordnungen usw. gespeichert werden können.

Die Speicherbereiche 11 bis 13 können in Form von einem oder mehreren auf der Karte angeordneten elektronischen Chips oder in Form von laserlesbaren, optischen Speicherbereichen ausgebildet sein. Bei sogenannten Hybridkarten können die Speicherbereiche 11 und 12 in Form eines elektronischen Chips, der zusätzliche kryptographische Programme aufweist, ausgebildet sein und der Speicherbereich 13 in Form eines optischen Speicherbereiches.

Das Schreib-/Lese-Gerät 2 weist ein Erkennungsprogramm R/IC zum Lesen des die Karte individualisierenden Codes IC und ein Erkennungsprogramm R/VC zum Erkennen des Gültigkeitscodes VC auf. Ferner ist eine funkgesteuerte Kalenderuhr 21 in das Schreib-/Lese-Gerät integriert. Nach dem Einschieben der Karte 1 in das Gerät 2 werden die Codes IC und VC durch die Programme R/IC und R/VC entschlüsselt und die aus dem Gültigkeitscode VC ermittelte Gültigkeitsdauer der Karte mit der Kalenderdatenbasis Date mittels eines im Gerät 1 vorgesehenen Vergleichsprogrammes 22 verglichen. Im Falle der Ungültigkeit der Karte wird über den Pfad N die Karte zurückgewiesen NA. Im Falle der Gültigkeit der Karte wird das Schreib-/Lese-Programm für das Speicherfeld 13 über Pfad Y aktiviert.

Ferner kann vorgesehen sein, daß nach dem Einschieben der Karte 1 in das Gerät 2 über eine Tastatur ein persönliche Idendifikationsnummer des Karteninhabers PIN in das Schreib-/Lese-Gerät eingegeben wird, wobei mittels eines Vergleichsprogramms 24 die Berechtigung zur Kartenbenutzung geprüft wird.

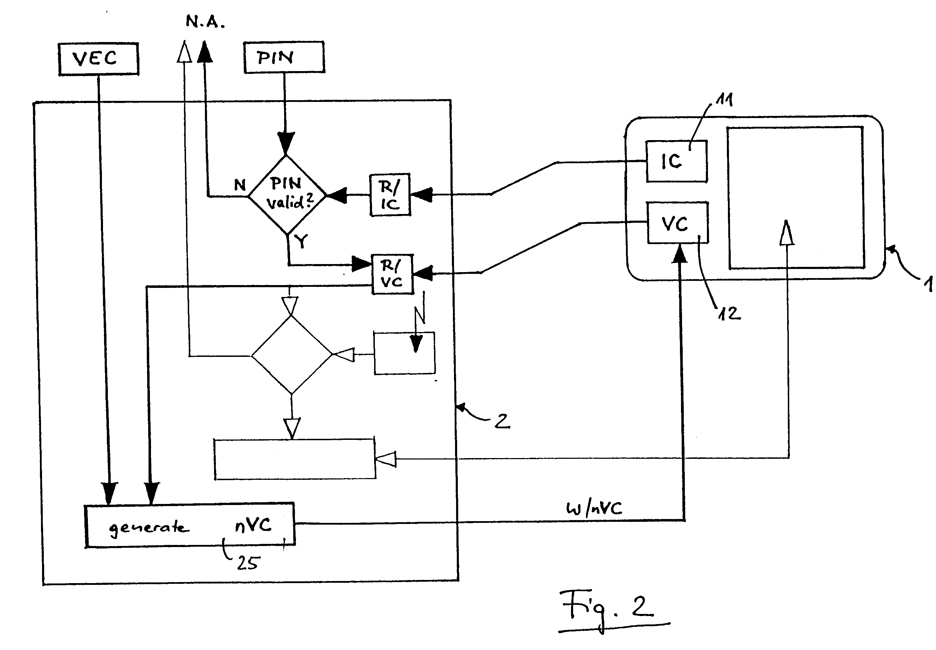

Wie aus Fig. 2 ersichtlich, weist das Schreib-/Lese-Gerät 2 ferner ein Programm 25 auf, das unter Verarbeitung des z.B. über die Tastatur eingegebenen Verlängerungspaßwortes VEC mit dem Code VC und/oder IC einen neuen Gültigkeitscode nVC generiert, der in den Speicherbereich 12 geschrieben wird.

Bei den Schreib-/Lese-Geräten gemäß Fig. 1 und 2 kann es sich um einheitliche Geräte handeln, die sowohl die Nutzung der Karte (wie in Fig. 1) als auch die Revalidierung (wie in Fig. 2) erlauben. Im Falle, daß es sich um getrennte Geräte handelt, brauchen die jeweils nicht hervorgehobenen Elemente nicht vorhanden sein.

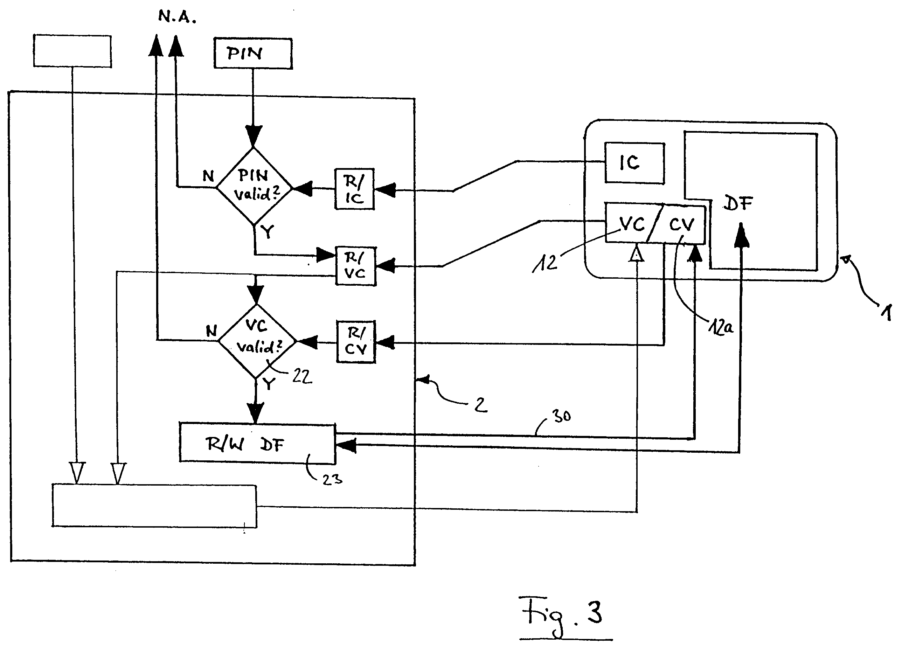

Im Falle eines durch die Nutzungsintensität definierten, autorisierten Nutzungsumfangs ist gemäß Fig. 3 die Datenbasis CV für die Ermittlung der Restgültigkeit der Karte 1 in einem Speicherbereich 12a der Karte vorgesehen. Das Schreib-/Lese -Gerät 2 enthält ein Erkennungsprogramm R/CV für den Code CV, der den bisher verbrauchten Nutzungsumfang charakterisiert. Bei jeder Benutzung der Karte wird durch das Schreib-/Lese-Programm 23 gleichzeitig der Code CV - wie durch Pfeil 30 angedeutet - aktualisiert. Die Revalidisierung erfolgt entsprechend Fig. 2.

## Patentansprüche

1. Einheit aus Datenspeicherkarte (1) und mindestens einem Schreib-/Lese-Gerät (2), wobei die Karte (1) lediglich während eines definierten, verlängerbaren Gebrauchsintervalls (Gültigkeit) vom Schreib-/Lese-Gerät (2) gelesen und/oder beschrieben werden kann und wobei die Gültigkeitsdauer der Karte (1) mittels eines auf die Karte bezogenen Verlängerungspaßwortes (VEC) verlängert werden kann, gekennzeichnet durch folgende Merkmale:
a) die Karte weist auf
a1) einen Speicherbereich, auf dem ein die Karte individualisierender Code (IC) gespeichert ist,
a2) einen Speicherbereich, auf dem ein weiterer Code (VC) gespeichert ist, der eine begrenzte Gültigkeit charakterisiert, sowie
a3) einen Speicherbereich (DF) als eigentlichen Datenspeicherbereich;
b) mindestens ein Schreib-/Lese-Gerät, das
b1) Erkennungsprogramme (R/IC, R/VC) für den individualisierenden Code (IC) und den Gültigkeitscode (VC) aufweist,
b2) Zugriff zu einer Datenbasis (Date, CV) hat, die die bereits verbrauchte Gültigkeit der Karte charakterisiert,
b3) ein Programm, das aufgrund eines Vergleichs der Datenbasis (Date, CV) mit dem Gültigkeitscode (VC) entweder die Karte als ungültig zurückweist oder ein Schreib-/Lese-Programm für den eigentlichen Speicherbereich (DF) aktiviert, aufweist;
sowie
c) mindestens ein Schreib-/Lese-Gerät, das neben dem Merkmal b1) aufweist:
c1) ein Erkennungsprogramm für ein Verlängerungspaßwort (VEC) und
c2) ein Programm zur Verarbeitung des Verlängerungspaßwortes (VEC) mit dem individualisierenden Code (IC) und/oder dem Gültigkeitscode (VC) zur Erzeugung eines neuen Gültigkeitscodes (nVC), sowie
c3) Mittel zum Schreiben des neuen Gültigkeitscodes (nVC) auf den Speicherbereich für den Gültigkeitscode (VC),
wobei die Schreib-/Lese-Geräte gemäß b) und c) in einem einzigen Gerät integriert sein können.

2. Einheit gemäß Anspruch 1, wobei die Datenbasis (Date) eine in das Schreib-/Lese-Gerät integrierte, nicht manipulierbare Kalenderuhr ist und der Gültigkeitscode (CV) eine zeitliche Gültigkeitsdauer charakterisiert.

3. Einheit gemäß Anspruch 2, wobei die Kalenderuhr eine funkgesteuerte Normalzeit-Kalenderuhr ist.

4. Einheit nach Anspruch 1, wobei der Gültigkeitscode (CV) die zulässige Gebrauchsintensität der Karte (1) charakterisiert und die Datenbasis (CV) den akkumulierten, tatsächlichen Gebrauch der Karte (1) charakterisiert, wobei die Datenbasis (CV) in einem Speicherbereich der Karte (1) gespeichert ist und bei jedem Gebrauch der Karte (1) aktualisiert wird.

5. Einheit nach einem der Ansprüche 1 bis 4, wobei die Speicherkarte (1) eine optische Speicherkarte ist.

6. Einheit nach einem der Ansprüche 1 bis 4, wobei die Speicherkarte (1) eine Chip-Karte ist.

7. Einheit nach einem der Ansprüche 1 bis 6, wobei die Speicherkarte (1) eine Hybrid-Karte ist, die einen Chip-Speicherbereich und einen optischen Speicherbereich aufweist.

8. Einheit nach Anspruch 7, wobei zumindest der individualisierende Code (IC) und der Gültigkeitscode (VC) im Chip-Speicherbereich gespeichert sind.
